# EUROPÄISCHE PATENTSCHRIFT

(11) **EP 1 351 770 B1**
(45) Veröffentlichungstag und Bekanntmachung des Hinweises auf die Patenterteilung: **06.12.2006**
(21) Anmeldenummer: 02715295.8
(22) Anmeldetag: 14.01.2002
(51) Int. Cl.: B02C 18/22

(54) **VORRICHTUNG ZUR ZERKLEINERUNG VON KUNSTSTOFFABFALLGUT**
DEVICE FOR COMMINUTING PLASTIC WASTE MATERIAL
DISPOSITIF DE BROYAGE DE DECHETS PLASTIQUES

(30) Priorität: 15.01.2001 AT 572001
(43) Veröffentlichungstag der Anmeldung: 15.10.2003
(73) Patentinhaber: EREMA Engineering Recycling Maschinen und Anlagen Gesellschaft m.b.H., 4052 Ansfelden-Linz (AT)
(72) Erfinder: Bacher, Helmut, 4490 St. Florian (AT); Schultz, Helmuth, 4020 Linz (AT); Wendelin, Georg, 4033 Linz (AT)
(74) Vertreter: Wildhack, Helmut
(86) Internationale Anmeldenummer: PCT/AT2002/000010
(87) Internationale Veröffentlichungsnummer: WO 2002/055205

(56) Entgegenhaltungen:
- DE-A- 4 026 795
- DE-A- 19 916 800
- DE-U- 29 708 328

## Beschreibung

Die Erfindung bezieht sich auf eine Vorrichtung zur Zerkleinerung von Kunststoffabfallgut, mit einem Gehäuse, in dem zumindest ein Rotor um eine, vorzugsweise horizontale, Achse durch einen Motor drehbar gelagert ist, welcher Rotor an seinem Mantel mit auf das zugeführte Material einwirkenden Zerkleinerungswerkzeugen, insbesondere Messern, versehen ist, denen im einen großvolumigen Zufuhrschacht bildenden Gehäuse ortsfest angeordnete Gegenwerkzeuge, insbesondere Gegenmesser, zugeordnet sind, und mit einer das im Zufuhrschacht befindliche Gut gegen den Rotor drückenden, einen Schieber aufweisenden Zufuhreinrichtung.

Zerkleinerungsvorrichtungen sind in mehreren Ausführungen bekannt, z.B. EP 605 382 B1, AT 398 712 B, DE 4 026 795. Versuche der Anmelder haben ergeben, dass eine sehr starke Abhängigkeit der Zerkleinerungsleistung bzw. des Durchsatzes von der Stellung des Schiebers relativ zum Rotor besteht. Sobald der Schieber bei seiner Vorschubbewegung in eine dem Rotor relativ benachbarte Lage kommt, erhöht sich die Zerkleinerungsleistung und bleibt so lange hoch, bis der gesamte aufgestaute Materialpolster zwischen Rotor und Schieber verbraucht ist. Geht der Schieber wieder zurück, um neues, zu zerkleinerndes Gut in den Bereich zwischen Rotor und Schieber zu bringen, dann geht die Zerkleinerungsleistung der Vorrichtung stark zurück. Wenn der Schieber wieder gegen den Rotor bewegt wird, bleibt die Zerkleinerungsleistuhg weiter gering, solange der Abstand zwischen Schieber und Rotor noch groß ist. Ein hoher Durchsatz der Vorrichtung stellt sich erst dann wieder ein, wenn der Schieber einen verhältnismäßig geringen Abstand vom Rotor erreicht hat. Eine Erklärung hiefür besteht darin, dass der Schieber in seiner rotornahen Stellung einen Einzugspalt für das zu zerkleinernde Gut bildet, welcher in der Art einer Leitschaufel wirkt.

Das beschriebene pulsierende bzw. stark schwankende Durchsatzverhalten ist schon bei einer reinen Zerkleinerungsmaschine nachteilig, da ja der durchschnittliche Durchsatz pro Zeiteinheit gegenüber dem Maximalwert gering ist. Besonders nachteilig sind die erwähnten Umstände jedoch bei einer Anlage zur Zerkleinerung von Kunststoff, bei welcher der Zerkleinerungsvorrichtung ein Extruder unmittelbar nachgeschaltet ist, weil infolge des ungleichmäßigen Durchsatzes der Zerkleinerungsmaschine auch die Extruderleistung stark schwankt und damit die am Extruderausgang, etwa in einer Formanlage, enthaltenen Endprodukte stark ungleich werden.

Die Erfindung setzt sich zur Aufgabe, diese Nachteile zu vermeiden und eine Zerkleinerungsvorrichtung der eingangs geschilderten Art so zu verbessern, dass der zeitliche Durchsatz der Vorrichtung wesentlich vergleichmäßigt wird. Die Erfindung löst diese Aufgabe dadurch, dass die Zufuhreinrichtung mindestens zwei übereinander angeordnete, das Gut dem Rotor zuführende Schieber aufweist, die unabhängig voneinander zum Rotor hin bzw. von ihm weg bewegbar sind, wobei die dem Rotor zugewendete Stirnfläche des untersten Schiebers mit der Tangente an den Hüllkreis der vom Rotor getragenen Zerkleinerungswerkzeuge einen in wesentlichen keilförmigen Einzugspalt für das zu zerkleinernde Gut begrenzt, der sich nach unten bis zu seinem unteren Ende verschmälert. Der obere oder die oberen Schieber dieses Mehrfachschiebersystems wirkt bzw. wirken als zusätzliche Zufuhreinrichtung, welche dem keilförmigen Einzugspalt zwischen dem Rotor und dem Stimende des unteren Schiebers neues, zu zerkleinerndes Material zubringt. Überraschenderweise haben Versuche gezeigt, dass durch diese einfache Maßnahme eine wesentliche Verbesserung des Durchsatzverhaltens der Vorrichtung erzielbar ist, vermutlich deswegen, weil das unten liegende schmälere Ende des keilförmigen Einzugsspaltes die Andrückung des zu zerkleinernden Materiales an den Rotor nach unten steigert.

Aus DE 196 14 030 A1 ist es bekannt, bei einer Zerkleinerungsmaschine für zähe Kunststoffabfälle eine Verschlussplatte im oberen Bereich eines Zustellschiebers vorzusehen, welche durch einen getrennten Antrieb in eine die Zerkleinerungswalze überdeckende Arbeitsstellung vorschiebbar ist. Dadurch kann aber kein zusätzliches Material mehr dem zwischen Rotor und Schieber befindlichen Einzugspalt zugeführt werden.

Aus DE 19916800 A1 ist eine Vorrichtung zum Zerkleinern von vorzugsweise plastischen Massen, insbesondere von feuchtem Ton, bekannt geworden, bei welcher im Zerkleinerungsraum vor dem Rotor ein hin und her bewegbarer Schieber vorgesehen ist. Da der feuchte Ton sich in einem zum Zerkleinerungsraum führenden Einfülltrichter stauen kann, ist zur Lockerung dieses Materiales oberhalb des Schiebers ein weiterer hin und her verschiebbarer Schieber angeordnet. Eine solche Konstruktion kann aber die bei der Zerkleinerung von Kunststoffabfällen auftretenden, oben erwähnten Probleme nicht lösen, vor allem wegen der unterschiedlichen Form des zwischen Rotor und dem unteren Schieber bestehenden Spaltes.

Gemäß einer bevorzugten Ausführungsform der Erfindung sind die übereinander liegenden Schieber in Anlage aneinander parallel zueinander in Führungen geführt, die gegebenenfalls in Bezug auf die Horizontale geneigt sind. Die gegenseitige Anlage der Schieber erleichtert die Ausbildung ihrer Führungen, da z.B. die Deckfläche des jeweils unteren Schiebers als Bodenfläche für die Führung des jeweils oberen Schiebers ausgenützt werden kann. Durch eine Neigung der Schieberbahnen, welche bis zur fast senkrechten Anordnung reichen kann, lassen sich unterschiedliche Formen des keilförmigen Einzugspaltes zwischen Rotor und unterem Schieber erzielen und als Folge davon unterschiedliche Zufuhrverhältnisse für das zu zerkleinernde Gut.

Im Rahmen der Erfindung können die übereinander angeordneten Schieber entlang geradliniger oder kreisbogenförmig gekrümmter Führungen geführt sein. Die geradlinigen Führungen sind konstruktiv einfacher zu gestalten, jedoch in der Regel aufwendiger im Hinblick auf den Platzbedarf in horizontaler Richtung, welcher nicht immer und überall unbegrenzt zur Verfügung steht. Diesbezüglich sind kreisbahnförmig geführte Schieber günstiger.

Im Rahmen der Erfindung kann der untere bzw. unterste Schieber in seiner Lage relativ zum Rotor fixierbar sein. Dadurch wird ein während des Arbeitsvorganges konstanter Einzugspalt zwischen Rotor und der ihm zugewendeten Schieberstirnwand erhalten, in welchen Einzugspalt die den bzw. die oberen Schieber aufweisende Zufuhreinrichtung das zu zerkleinernde Material hineinfördert. Der Einzugspalt bildet einen Raum für einen ausreichenden Materialpolster, welcher während der Rückzugbewegung zumindest eines oberen Schiebers ausreicht, um ein einigermaßen konstantes Durchsatzverhalten der Vorrichtung auch während dieser Rückzugbewegung aufrecht zu erhalten.

Manche zu zerkleinernde Kunststoffmaterialien, insbesondere einem Recyclingvorgang zuzuführender Kunststoff, wirken abrasiv, insbesondere, wenn die Verunreinigungen körniges Feststoffmaterial, z.B. Sand oder kleine Steinchen, enthalten. Die das Material an den Rotor andrückende Stirnfläche zumindest eines unteren Schiebers kann daher einem starken Verschleiß unterliegen. Es ist daher im Rahmen der Erfindung zweckmäßig, diese Stirnfläche von einem austauschbaren Endstück zu bilden. Diese Austauschbarkeit kann auch dazu herangezogen werden, unterschiedliche Endstücke vorzusehen, welche mit dem Rotor unterschiedliche Einzugspalte bzw. Einzugskeilwinkel begrenzen. Dadurch lässt sich eine Anpassung an die besondere Art des zu zerkleinernden Materiales erzielen.

Die erwähnte starke Beanspruchung der dem Rotor zugewendeten Stirnfläche eines Schiebers hat zur Konsequenz, dass sich der dem Rotor zugewendete Stirnbereich des Schiebers stark erwärmen kann. Es ist daher zweckmäßig, in diesem Bereich des Schiebers bzw. in seinem Endstück Kanäle für ein Kühlmittel vorzusehen.

Zur Anpassung an unterschiedliche, zu zerkleinernde Materialien kann im Rahmen der Erfindung die dem Rotor zugewendete Stirnfläche zumindest eines Schiebers eine auf das einzuziehende Gut einwirkende Struktur aufweisen, insbesondere mit Nuten versehen sein. Diese Nuten können gerade verlaufend, also in Umlaufrichtung der Zerkleinerungswerkzeuge, ausgeführt sein, sodass das zu zerkleinernde Material nicht seitlich ausweichen kann. Diese Nuten können aber auch schräg zur erwähnten Umlaufrichtung angeordnet sein, sodass schon im Schneidraum bzw. im Bereich zwischen dem Rotor und den Schiebern, eine in Axialrichtung des Rotors gerichtete Bewegungskomponente des zu zerkleinernden Materiales entsteht. Dies kann dazu ausgenützt werden, eine Materialbewegung in einer definierten gewünschten Richtung zu erzielen, etwa von den beiden Stirnflächen des Gehäuses weg, also in Richtung zum axialen Mittenbereich des Rotors zu, oder in Richtung zu einem Stimende des Rotors hin. Letztere Ausführung eignet sich insbesondere dann, wenn das vom Rotor zerkleinerte Gut einem in axialer Richtung an den Rotor angeschlossenen Extruder zugeführt werden soll.

Eine besonders günstige Weiterbildung besteht im Rahmen der Erfindung ferner darin, dass zumindest ein Schieber über die Länge des Rotors in eine Schiebergruppe unterteilt ist, deren einzelne Elemente, gegebenenfalls zu einer unterschiedlichen Bewegung relativ zum Rotor angetrieben sind. Dadurch lässt sich ein über die Länge des Rotors unterschiedliches Andrückverhalten auf das zu zerkleinernde Material erzielen, was vorteilhaft ist. Durch eine geeignete Programmsteuerung für die Bewegungen der einzelnen Schieber lässt sich eine Anpassung an die jeweils vorliegende Qualität des zerkleinerten Materiales erzielen.

In der Zeichnung sind Ausführungsbeispiele des Erfindungsgegenstandes schematisch dargestellt. Fig. 1 zeigt die Vorrichtung im Vertikalschnitt. Die Fig. 2 bis 6 zeigen je eine Ausführungsvariante für die Anordnung bzw. Ausbildung der Schieber. Fig. 7 zeigt in axonometrischer Ansicht ein Detail.

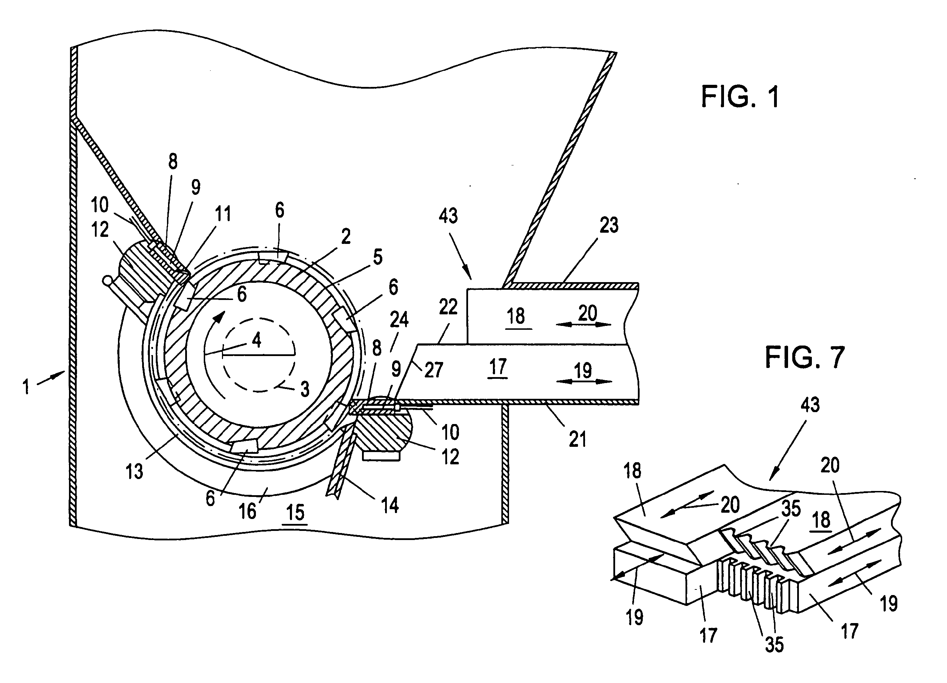

Bei der Ausführungsform nach Fig. 1 bildet ein Gestell ein Gehäuse 1, in welchem ein walzenförmiger Rotor 2 mittels an seinen Stirnenden angeordneter Wellenstummel 3 um seine horizontale Achse drehbar gelagert ist. Dieser Rotor 2 ist zur Umlaufbewegung in Richtung des Pfeiles 4 durch einen nicht dargestellten Motor angetrieben und trägt an seinem Mantel 5, teilweise in diesen eingebettet, mehrere als Messer 6 ausgebildete Zerkleinerungswerkzeuge. Diese wirken auf das zu zerkleinernde, von Kunststoffabfallmaterial gebildete Gut ein, das durch einen vom Gehäuse 1 gebildeten großvolumigen Zufuhrschacht 7 zugeführt wird, der sich zweckmäßig nach unten zu gegen den Rotor 2 verengt. Den Messern 6 sind im Gehäuse ortsfest befestigte Gegenwerkzeuge zugeordnet, die als Gegenmesser 8 ausgebildet sind. Diese Gegenmesser 8 können gekühlte Hohlräume 9 aufweisen, denen ein Kühlmittel, insbesondere Kühlwasser, über Leitungen 10 zugeführt wird. Dieses Kühlmittel kann aus den Gegenmessern 8 wieder abgeführt und im Kreislauf geführt sein, es können jedoch die Gegenmesser 8 auch Düsen 11 aufweisen, welche das Kühlmittel auf den Mantel 5 des Rotors 2 aufspritzen und dadurch auch die Messer 6 kühlen. Die Gegenmesser 8 können in Stangen 12 des Gehäuses 1 eingebaut sein, an denen ein Sieb 13 befestigt sein kann, durch welches das zerkleinerte Material in einen von einer Seitenwand 14 begrenzten Sammelraum 15 fällt. Zur Verstärkung kann das Sieb 13 mit Flanschen 16 versehen sein, welche auch die Befestigung des Siebes am Gehäuse 1 erleichtern. Dies entspricht einer Abfuhr des vom Rotor 2 zerkleinerten Gutes nach unten. Es kann jedoch auch die Anordnung so getroffen sein, dass diese Abfuhr des zerkleinerten Gutes in Axialrichtung des Rotors 2 erfolgt, etwa zu einem dem Rotor 2 nachgeschalteten, nicht dargestellten Extruder, worauf später noch näher eingegangen wird.

Die Messer 6 sind zweckmäßig entlang Messerkränzen am Rotor 2 angeordnet und passieren die entsprechend angeordneten Gegenmesser 8 mit engem Scherspalt. Wie dargestellt, können die Messer 6 in radialer Richtung unterschiedlich weit von der Achse des Rotors 2 entfernt sein, wodurch sich eine bessere Einwirkung auf das zu zerkleinernde Gut ergibt. Messer 6 und Gegenmesser 8 sind daher gleichsam verzahnungsartig unter Bildung der Scherspalte angeordnet. Das zu zerkleinernde Gut wird durch eine Zufuhreinrichtung 43 dem Rotor 2 zugeführt und an diesen angedrückt, welche im dargestellten Ausführungsbeispiel zwei Schieber 17, 18 aufweist, die übereinander angeordnet sind und unabhängig voneinander in Richtung der Doppelpfeile 19 bzw. 20 hin und her bzw. gegen den Rotor 2 zu bzw. von diesem weg bewegbar sind. Hiefür sind die Schieber 17, 18 mit nicht dargestellten Antrieben beliebiger bekannter Art verbunden. Der untere Schieber 17 ist entlang einer von einer Bodenplatte des Gehäuses 1 gebildeten Führung 21 geführt. Für den oberen Schieber 18 bildet einerseits die Deckfläche 22 des unteren Schiebers 17 eine Führung, anderseits ist er oben durch eine von einer Deckplatte gebildete Führung 23 geführt. Beide Schieber 17, 18 sind selbstverständlich auch seitlich entlang Wänden des Gehäuses 1 geführt. Wie Fig. 1 zeigt, bildet der untere Schieber 17 mit dem Mantel 5 des Rotors 2 einen Einzugspalt 24 für das zu zerkleinernde Gut, welcher Einzugsspalt 24 sich von seinem oberen Ende bis zu seinem unteren Ende im Wesentlichen keilförmig verschmälert. In diesem Einzugspalt 24 wird das Gut durch den unteren Schieber 17 gegen die umlaufenden Messer 6 gedrückt. Um zu vermeiden, dass während der Rückzugbewegung des Schiebers 17 bzw. in dessen vom Rotor 2 verhältnismäßig weit entfernten Stellungen der Durchsatz der Vorrichtung absinkt, ist der obere Schieber 18 vorgesehen, der so bewegt wird, dass während dieser kritischen Phasen zu zerkleinerndes Material gegen den Rotor 2 gefördert wird. Für diese Bewegungen der Schieber 17, 18 können geeignete Steuerungen vorgesehen sein, deren Programm zweckmäßig variabel ist, um sich an unterschiedliche Beschaffenheit des zu zerkleinernden Gutes anpassen zu können.

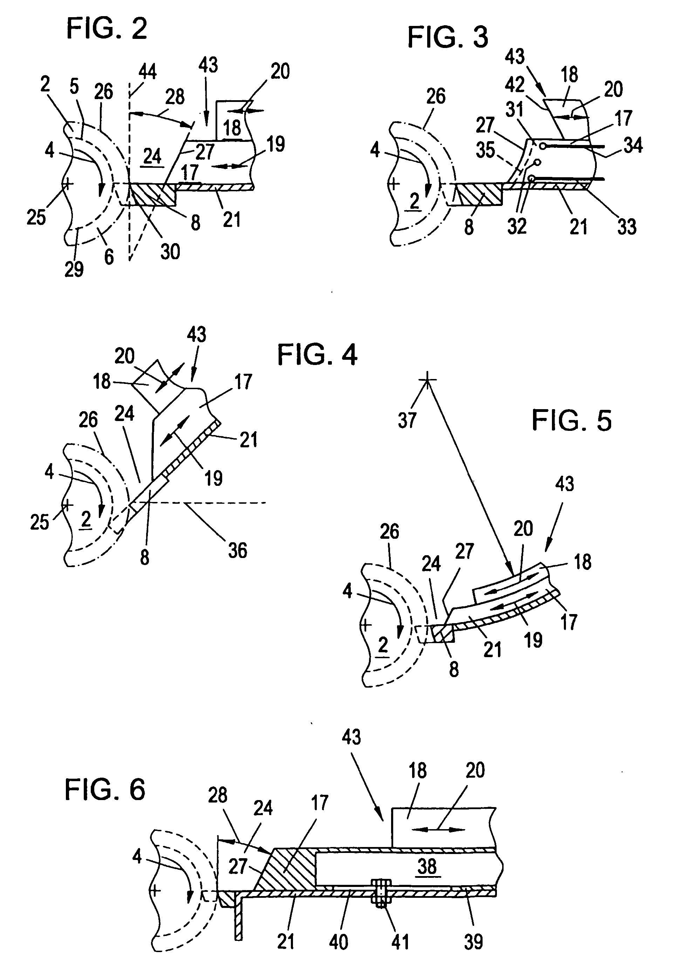

Um den Einzugspalt 24 möglichst keilförmig auszubilden, können die beiden Schieber 17, 18 höher angeordnet werden, als dies in Fig. 1 dargestellt ist. Fig. 2 zeigt eine Ausführungsform, bei welcher die Oberkante der Führung 21 etwa auf der Höhe der Achse 25 des walzenförmigen Rotors 2 liegt. Dadurch ergibt sich ein keilförmiger Einzugspalt 24 zwischen der gesamten Stirnfläche 27 des unteren Schiebers 17 und einer Tangente 44 an den Hüllkreis 26 der Bewegungsbahn der Messer 6, welcher Einzugspalt 24 sich nach unten zu verschmälert. Dies begünstigt die Einziehung des zu zerkleinernden Gutes, insbesondere, wenn der Keilwinkel 28 dieses Einzugspaltes 24 durch eine entsprechende Neigung der Stirnfläche 27 des unteren Schiebers 17 vergrößert wird. In Fig. 2 ist dieser Winkel 28 zwischen der Stirnfläche 27 und der Tangente 44 an den äußeren Hüllkreis 26 der Messer 6 eingezeichnet, er gilt in analogem Maß natürlich auch für den Grundkreis 29 des Rotors 2, von welchem die Messer 6 ausgehen. Die Messer greifen in entsprechende Ausnehmungen 30 des Gegenmessers 8 unter Bildung schmaler Scherspalte ein.

Bei vielen zu verarbeitenden Materialien, insbesondere bei durch Feststoffe, z.B. mineralische Körner (Sand od.dgl.), verunreinigten Kunststoffen, können die dem Rotor zugewendeten Stirnflächen der Schieber 17, 18, insbesondere des unteren Schiebers 17, einem starken Verschleiß unterworfen sein. Es ist daher zweckmäßig, diese Stirnfläche 27 von einem austauschbaren Endstück 31 (Fig. 3) zu bilden, vorzugsweise aus besonders verschleißfestem Material. Diese Austauschbarkeit des Endstückes 31 gibt die Möglichkeit, durch unterschiedliche Form der Stirnfläche 27 der einzelnen Endstücke 31 unterschiedliche Keilwinkel 28 bzw. unterschiedliche Formen des keilförmigen Einzugspaltes 24 herzustellen. So ist es, wie die Figuren zeigen, möglich, dem Einzugsspalt einen über seine Höhe unterschiedlichen Keilwinkel zu geben, da, wie Fig. 3 zeigt. die Stirnfläche 27 des Schiebers 17 nicht eben ausgebildet sein muss, sondern auch eine Krümmung aufweisen kann. Dadurch ergibt sich in einfacher Weise die Möglichkeit, sich an die Besonderheiten des jeweils vorliegenden zu zerkleinernden Gutes anzupassen.

Da im Betrieb im der Stirnfläche 27 benachbarten Bereich des Schiebers 17, insbesondere im einem Endstück 31, höhere Temperaturen auftreten, ist es zweckmäßig, diesen Bereich, insbesondere das Endstück 31, mit Kanälen 32 für ein Kühlmittel auszubilden, welche Kanäle 32 an eine Zuleitung 33 und eine Ableitung 34 für das Kühlmedium angeschlossen sind. Es können beliebige, an sich bekannte Kühlmedien verwendet werden, insbesondere gekühltes Wasser.

Eine weitere Anpassung an das jeweils vorliegende, zu zerkleinernde Gut ergibt sich dadurch, dass die dem Rotor 2 zugewendete Stirnfläche 27 des unteren Schiebers 17 mit einer Struktur ausgebildet ist, insbesondere mit Nuten 35 (Fig. 3, 7), wodurch eine Einwirkung auf das zu verarbeitende Gut im Bereich des Einzugspaltes 24 erzielt wird. Verlaufen diese Nuten 35 gerade bzw. vertikal, also in einer Richtung, welche normal steht auf die Richtung der Achse 25 des Rotors 2, dann verhindern diese Nuten 35 ein Ausweichen des zu verarbeitenden Gutes in Axialrichtung des Rotors 2 und erzielen somit eine verstärkte Einziehung in den Einzugspalt 24. Verlaufen diese Nuten 35 jedoch schräg, d.h. hat ihre Längsrichtung eine Komponente, welche in Achsrichtung des Rotors 2 gerichtet ist, dann bewirken diese Nuten einen Transport des zu verarbeitenden Gutes mit einer Bewegungskomponente in jener Richtung, nach welcher das jeweils untere Ende der Nuten 35 zeigt. Diese in Axialrichtung des Rotors 2 gerichtete Bewegungskomponente des verarbeiteten Materiales kann dazu ausgenützt werden, dieses Material zum einen Stirnende des Rotors hin zu bewegen, etwa, um dort dieses Material aus dem Gehäuse 1 auszubringen. Eine solche Konstruktion eignet sich insbesondere dann, wenn an dieses Stirnende bzw. an die Austragsöffnung für das zerkleinerte Kunststoffgut die Einzugsöffnung eines Schneckenextruders od.dgl. angeschlossen ist, da sich auf diese Weise eine koaxiale Bauweise von Zerkleinerer und Extruder erzielen lässt. Zerkleinerer und Extruder können dann von einem gemeinsamen Antrieb aus angetrieben werden.

Wie Fig. 7 zeigt, können solche Nuten 35 nicht nur am unteren Schieber 17, sondern auch am oberen Schieber 18 vorgesehen sein.

Entsprechend der in Fig. 3 gezeigten Krümmung der Stirnfläche 27 des Schiebers 17 können die in den Stirnflächen der Schieber 17, 18 verlaufenden Nuten auch gekrümmt ausgebildet sein.

Die in den Fig. 1 bis 3 dargestellten Ausführungsbeispiele zeigen eine Führung der Schieber 17, 18 in im wesentlichen horizontaler Richtung. Dies ist jedoch absolut nicht zwingend. Wie Fig. 4 zeigt, können die beiden Schieber 17, 18 auch entlang einer in Bezug auf die Horizontale 36 geneigt angeordneten Führung 21 geführt sein, wobei auch das Gegenmesser 8 geneigt angeordnet sein kann, doch nicht muss. Diese beiden Schieber 17, 18 sind entlang einer ebenfalls kreisbogenförmig gekrümmten Führung 21 geführt und auch das Gegenmesser 8 kann entsprechend gekrümmt sein. Der Mittelpunkt 37 der einzelnen Kreisbogen stimmt überein.

Die Ausführungsformen nach den Fig. 4 und 5 können insofern kombiniert werden, als die Kreisbogenform der Schieber 17, 18 bzw. der Führung 21 nicht in horizontaler Richtung an den Rotor 2 anschließen muss, sondern auch geneigt einlaufen kann, wie dies für die Führung 21 in Fig. 4 der Fall ist.

Es kann für bestimmte Anwendungsfälle vorteilhaft sein, den den Einzugspalt 24 begrenzenden unteren Schieber 17 zeitweise oder dauernd festzulegen, wenn ein definiertes Gut konstant verarbeitet wird. Um den unteren Schieber 17 auf den gewünschten Einzugspalt 24 einstellen zu können, kann dieser Schieber 17 mit einem Hohlraum 38 (Fig. 6), also kastenförmig, ausgebildet und an seiner Bodenwand 39 mit einem Längsschlitz 40 versehen sein, in welchem bei der Verstellung des Schiebers 17 eine Schraube 41 geführt ist, welche die Führung 21 durchsetzt. Wenn diese Schraube 41 bzw. die an der Unterseite der Führung 21 angeordnete Mutter angezogen wird, so wird der Schieber 17 in der eingestellten Position festgelegt. Der Längsschlitz 40 sollte genügend lang sein, um den unteren Schieber 17 in eine genügend zurückgezogene Position bringen zu können, sodass auch sehr große Materialklumpen verarbeitet werden können. Eine Alternative zu der zuvor beschriebenen Konstruktion besteht darin, den Schieber 17 mittels einer Spindel oder eines hydraulischen Antriebes in Richtung des Doppelpfeiles 19 verstellen und in der gewünschten Position feststellen zu können. Auf diese Weise kann durch den unteren bzw. untersten Schieber 17 ein während eines Arbeitsvorganges konstanter Einzugsspalt 24 zwischen dem Rotor 2 und der ihm zugewendeten Stirnwand 27 dieses Schiebers 17 aufrecht erhalten werden. In diesen Einzugsspalt 24 fördert die vom oberen Schieber 18 bzw. den oberen Schiebern gebildete Zufuhreinrichtung das zu zerkleinernde Kunststoffgut hinein.

Ferner kann es zweckmäßig sein, die Stirnfläche 42 (Fig. 3) des oberen Schiebers 18 in Bezug auf seine Bewegungsrichtung (Doppelpfeil 20) zu neigen, und zwar entgegengesetzt gerichtet zur Stirnfläche 27 des unteren Schiebers 17. Dies verhindert das Ausweichen des zu verarbeitenden Materiales nach oben in den trichterförmigen Zufuhrschacht 7 (Fig. 1) und begünstigt somit die Zudrückung des zu verarbeitenden Materiales gegen den Rotor 2.

Bei allen Ausführungsformen ist es möglich, die beiden übereinander liegenden Schieber 17, 18 über die Rotorlänge zu unterteilen. Diese Unterteilung kann für den unteren Schieber 17 allein oder für den oberen Schieber 18 allein oder für beide Schieber 17, 18 getroffen werden, wobei in letzterem Fall die Unterteilung für die beiden Schieber 17, 18 nicht gleich sein muss. Es sind dann über die Länge des Rotors 2 zwei oder mehr untere bzw. obere Schieber 17 bzw. 18 vorhanden. Eine solche Unterteilung der-Schieber 17, 18 in jeweils zwei Schieberelemente ist in Fig. 7 dargestellt und es ist ersichtlich, dass die einzelnen Schieberelemente nicht einander gleich ausgebildet sein müssen. Diese Schieberelemente können hinsichtlich ihrer Bewegung unterschiedlich gesteuert werden, wobei das Steuerungsprogramm den jeweils vorliegenden Gegebenheiten angepasst werden kann.

Wie ersichtlich, können auch mehr als zwei Schieber übereinander angeordnet sein.

Wie erwähnt, ist es zweckmäßig, die Bewegungen der einzelnen Schieber auf das zu bearbeitende Gut abzustimmen, etwa mittels geeigneter Programmsteuerungen. Zumeist ist es zweckmäßig, den oberen Schieber bzw. die oberen Schieber dem untersten Schieber so vorlaufen zu lassen, dass das vom untersten Schieber gegen den Rotor 2 gedrückte Gut nicht nach oben ausweichen kann.

Es hat sich herausgestellt, dass zur Einstellung des Einzugsspaltes 24 folgende Vorgangsweise zweckmäßig ist: Zunächst werden alle Schieber 17, 18 zurückgezogen, und es werden die dem Rotor 2 zugewendeten Stirnflächen 27, 42 dieser Schieber 17, 18 in eine vom Rotor 2 zumindest annähernd gleich weit entfernte Lage gebracht. Hierauf wird das zu verarbeitende Kunststoffgut zwischen diese Stirnflächen 27, 42 und den Rotor 2 eingebracht, worauf dann alle Schieber 17, 18 vorgeschoben werden. Entsprechend dem jeweils vorliegenden, zu zerkleinernden Kunststoffgut wird dann die Bewegung der Schieber 17, 18 entsprechend gesteuert.

## Patentansprüche

1. Vorrichtung zur Zerkleinerung von Kunststoffabfallgut, insbesondere Kunststoffabfällen, mit einem Gehäuse, in dem zumindest ein Rotor um eine, vorzugsweise horizontale, Achse durch einen Motor drehbar gelagert ist, welcher Rotor an seinem Mantel mit auf das zugeführte Material einwirkenden Zerkleinerungswerkzeugen, insbesondere Messern, versehen ist, denen im einen großvolumigen Zufuhrschacht bildenden Gehäuse ortsfest angeordnete Gegenwerkzeuge, insbesondere Gegenmesser, zugeordnet sind, und mit einer das im Zufuhrschacht befindliche Gut gegen den Rotor drückenden, einen Schieber aufweisenden Zufuhreinrichtung, wobei, die Zufuhreinrichtung (43) mindestens zwei übereinander angeordnete, das Gut dem Rotor (2) zuführende Schieber (17, 18) aufweist, die unabhängig voneinander zum Rotor (2) hin bzw. von ihm weg bewegbar sind, wobei die dem Rotor (2) zugewendete Stirnfläche (27) des untersten Schiebers (17) mit der Tangente (44) an den Hüllkreis (26) der vom Rotor (2) getragenen Zerkleinerungswerkzeuge (6) einen im wesentlichen keilförmigen Einzugspalt (24) für das zu zerkleinernde Gut begrenzt, der sich nach unten bis zu seinem unteren Ende verschmälert.

2. Vorrichtung nach Anspruch 1, **dadurch gekennzeichnet, dass** die übereinander liegenden Schieber (17, 18) in Anlage aneinander stehen und parallel zueinander in Führungen (21, 23) geführt sind, die gegebenenfalls in Bezug auf die Horizontale (36) geneigt sind.

3. Vorrichtung nach Anspruch 1 oder 2, **dadurch gekennzeichnet, dass** die übereinander liegenden Schieber (17, 18) entlang geradliniger oder kreisbogenförmig gekrümmter Führungen (21, 23) geführt sind.

4. Vorrichtung nach einem der Ansprüche 1 bis 3, **dadurch gekennzeichnet, dass** der untere bzw. unterste Schieber (17) in seiner Lage relativ zum Rotor (2) fixierbar ist.

5. Vorrichtung nach einem der Ansprüche 1 bis 4, **dadurch gekennzeichnet, dass** die dem Rotor (2) zugewendete Stirnfläche (27) zumindest eines Schiebers (17, 18) von einem austauschbaren Endstück (31) gebildet ist.

6. Vorrichtung nach Anspruch 5, **dadurch gekennzeichnet, dass** unterschiedliche Endstücke (31) mit dem Rotor (2) unterschiedliche Einzugspalte (24) bzw. Einzugskeilwinkel (28) begrenzen.

7. Vorrichtung nach einem der Ansprüche 1 bis 6, **dadurch gekennzeichnet, dass** im Bereich der dem Rotor (2) zugewendeten Stirnfläche (27) zumindest eines Schiebers (17, 18) bzw. im Endstück (31) Kanäle (32) für ein Kühlmittel vorgesehen sind.

8. Vorrichtung nach einem der Ansprüche 1 bis 7, **dadurch gekennzeichnet, dass** die dem Rotor (2) zugewendete Stirnfläche (27) zumindest eines Schiebers (17, 18) eine auf das einzuziehende Gut einwirkende Struktur aufweist, die insbesondere mit gerade oder gekrümmt oder schräg verlaufenden Nuten (35) versehen ist.

9. Vorrichtung nach einem der Ansprüche 1 bis 8, **dadurch gekennzeichnet, dass** zumindest ein Schieber (17, 18) über die Länge des Rotors (2) in eine Schiebergruppe unterteilt ist, deren einzelne Elemente gegebenenfalls zu einer unterschiedlichen Bewegung relativ zum Rotor (2) angetrieben sind.

10. Verfahren zum Betrieb einer Vorrichtung nach Anspruch 1, **dadurch gekennzeichnet, dass** durch den unteren bzw. untersten Schieber ein während eines Arbeitsvorganges konstanter Einzugsspalt zwischen dem Rotor und der ihm zugewendeten Stirnwand dieses Schiebers aufrecht erhalten wird, in welchen Einzugsspalt die den bzw. die oberen Schieber aufweisendende Zufuhreinrichtung das zu zerkleinernde Material hineinfördert.

11. Verfahren nach Anspruch 10, **dadurch gekennzeichnet, dass** zur Einstellung dieses Einzugsspaltes alle Schieber zurückgezogen und mit ihren dem Rotor zugewendeten Stirnflächen in eine vom Rotor gleich weit entfernte Lage gebracht werden, worauf zu verarbeitendes Material zwischen diese Stirnflächen und den Rotor eingebracht wird, und dass dann alle Schieber vorgeschoben werden.

## Claims

1. Apparatus for comminuting synthetic plastic waste material, comprising a housing in which at least one rotor is bearingly supported for rotation by a motor around a, preferably horizontal, axis, which rotor on its periphery is provided with comminuting tools, in particular knives, acting onto the supplied material, counter tools, in particular counter knives, stationarily disposed within the housing forming a supply shaft of great volume being assigned to the comminuting tools, and further comprising a feed means having a slide member pressing the material disposed within the supply shaft against the rotor, whereby the feed means (43) comprises at least two slide members (17, 18) superimposed above each other and feeding the material to the rotor (2), which slide members are independently from each other moveable towards the rotor (2) or away from it, wherein the front surface (27) of the lowermost slide member (17) facing the rotor (2) defines with the tangent (44) to the enveloping circle (26) of the comminuting tools (6) carried by the rotor (2) a substantially wedge-shaped intake gap (24) for the material to be comminuted, which intake gap narrows to below up to its lower end.

2. Apparatus according to claim 1, **characterized in that** the slide members (17, 18) superimposed above each other are contacting each other and are guided in parallel to each other by guide means (21, 23), that, if desired, are inclined with respect to the horizontal direction (36).

3. Apparatus according to claim 1 or 2, **characterized in that** the slide members (17, 18) disposed above each other are guided along guide means (21, 23) that are straight-lined or curved in the manner of an arc of a circle.

4. Apparatus according to any of claims 1 to 3, **characterized in that** the lower slide member (17) or the lowermost slide member can be fixed in its position relative to the rotor (2).

5. Apparatus according to any of claims 1 to 4, **characterized in that** the front surface (27) of at least one slide member (17, 18) facing the rotor (2) is formed by an exchangeable end piece (31).

6. Apparatus according to claim 5, **characterized in that** different end pieces (31) confine with the rotor (2) different intake gaps (24) or, respectively, intake wedge angles (28).

7. Apparatus according to any of claims 1 to 6, **characterized in that** channels (32) for a cooling medium are provided in the region of the front surface (27) of at least one slide member (17, 18) facing the rotor (2) or, respectively, within the end piece (31).

8. Apparatus according to any of claims 1 to 7, **characterized in that** the front surface (27) facing the rotor (2) of at least one slide member (17, 18) has a structure acting onto the material to be drawn in, which structure in particular is provided with grooves (35) that extend straight-lined or curved or obliquely.

9. Apparatus according to any of claims 1 to 8, **characterized in that** at least one slide member (17, 18) is subdivided over the length of the rotor (2) in a group of slide members, the several elements thereof, if desired, are driven to different movements relative to the rotor (2).

10. Process for operating an apparatus according to claim 1, **characterized in that** by the lower slide or the lowermost slide during an operation step a constant intake gap is kept between the rotor and the front wall of this slide facing it, into which intake gap the material to be comminuted is fed in by the supply means comprising the upper slide or the upper slides.

11. Process according to claim 10, **characterized in that** for adjusting this intake gap all slides are retracted and their front surfaces facing the rotor are brought into a position in which they are equally spaced apart from the rotor, whereupon material to be processed is introduced between these front surfaces and the rotor, and that then all slides are advanced.

## Revendications

1. Dispositif de broyage de matières plastiques, notamment de résidus de plastique, comportant un carter dans lequel est agencé au moins un rotor apte à être mis en rotation autour d'un axe, de préférence horizontal, au moyen d'un moteur, lequel rotor est doté au niveau de son enveloppe d'outils de broyage, notamment de lames, agissant sur le matériel introduit et auxquels sont associés des contre-outils, notamment des contre-lames, montés fixes dans le carter à grand volume formant puits d'alimentation, et comportant un dispositif d'alimentation qui presse la matière se trouvant dans le puits d'alimentation contre le rotor et présente un coulisseau ; dans lequel le dispositif d'alimentation (43) présente au moins deux coulisseaux (17, 18) superposés qui amènent la matière au rotor (2) et qui sont mobiles indépendamment l'un de l'autre en direction du rotor (2) ou en s'éloignant du rotor (2), la face frontale (27) en regard du rotor (2) du coulisseau le plus bas (17) délimitant, avec la tangente (44) au cercle (26) enveloppant les outils de broyage (6) portés par le rotor (2), un interstice d'admission (24) de la matière à broyer sensiblement cunéiforme, lequel interstice s'effile vers le bas jusqu'à son extrémité inférieure.

2. Dispositif selon la revendication 1, **caractérisé en ce que** les coulisseaux superposés (17, 18) sont en contact l'un avec l'autre et sont guidés parallèlement entre eux dans des coulisses (21, 23) éventuellement inclinées par rapport à l'horizontale (36).

3. Dispositif selon la revendication 1 ou la revendication 2, **caractérisé en ce que** les coulisseaux superposés (17, 18) sont guidés le long de coulisses (21, 23) rectilignes ou en arc de cercle.

4. Dispositif selon l'une des revendications 1 à 3, **caractérisé en ce que** le coulisseau inférieur ou le plus bas (17) peut être immobilisé par rapport au rotor (2).

5. Dispositif selon l'une des revendications 1 à 4, **caractérisé en ce que** la face frontale (27) en regard du rotor (2) d'au moins un coulisseau (17, 18) est formée par un embout (31) échangeable.

6. Dispositif selon la revendication 5, **caractérisé en ce que** différents embouts (31) délimitent avec le rotor (2) différents interstices d'admission (24) ou angles d'admission (28).

7. Dispositif selon l'une des revendications 1 à 6, **caractérisé en ce que** des canaux (32) sont prévus pour un produit de refroidissement dans la zone de la face frontale (27) en regard du rotor (2) d'au moins un coulisseau (17, 18) ou dans l'embout (31).

8. Dispositif selon l'une des revendications 1 à 7, **caractérisé en ce que** la face frontale (27) en regard du rotor (2) d'au moins un coulisseau (17, 18) présente une structure agissant sur la matière à introduire, notamment dotée de rainures (35) droites, courbes ou obliques.

9. Dispositif selon l'une des revendications 1 à 8, **caractérisé en ce qu'**au moins un coulisseau (17, 18) est subdivisé sur la longueur du rotor (2) en un groupe de coulisseaux dont les éléments individuels sont éventuellement entraînés selon un mouvement différent relativement au rotor (2).

10. Procédé pour faire fonctionner un dispositif selon la revendication 1, **caractérisé en ce que**, au moyen du coulisseau inférieur ou le plus bas, un interstice d'admission constant est maintenu au cours d'une opération de travail entre le rotor et la face frontale dudit coulisseau en regard de celui-ci, interstice d'admission dans lequel le dispositif d'alimentation présentant le ou les coulisseaux supérieurs pousse le matériau à broyer.

11. Procédé selon la revendication 10, **caractérisé en ce que** pour ajuster cet interstice d'admission tous les coulisseaux sont mis en position de retrait et leurs faces frontales en regard du rotor sont éloignées du rotor d'une même distance, après quoi du matériau à transformer est introduit entre lesdites faces frontales et le rotor, et **en ce que** l'on fait ensuite avancer tous les coulisseaux.
